(19) Europäisches Patentamt
European Patent Office
Office européen des brevets

(11) Veröffentlichungsnummer: **0 352 671**
**A2**

# (12) EUROPÄISCHE PATENTANMELDUNG

(21) Anmeldenummer: **89113497.5**

(22) Anmeldetag: **22.07.89**

(51) Int. Cl.4: **C08G 59/14 , C09D 5/44 , C08G 59/54**

Patentansprüche für folgenden Vertragsstaat: ES.

(30) Priorität: **28.07.88 DE 3825562**

(43) Veröffentlichungstag der Anmeldung: **31.01.90 Patentblatt 90/05**

(84) Benannte Vertragsstaaten: **AT BE CH DE ES FR GB IT LI NL SE**

(71) Anmelder: **BASF Lacke + Farben Aktiengesellschaft**
**Max-Winkelmann-Strasse 80**
**D-4400 Münster(DE)**

(72) Erfinder: **Schwerzel, Thomas, Dr.**
**Budapester Strasse 51**
**D-6700 Ludwigshafen(DE)**
Erfinder: **Schupp, Hans, Dr.**
**Jean-Voelker-Strasse 40**
**D-6520 Worms(DE)**
Erfinder: **Lawrenz, Dirk, Dr.**
**Moerikestrasse 3**
**D-7257 Ditzingen 4(DE)**
Erfinder: **Oslowski, Hans, Dr.**
**Heinrichstrasse 5**
**D-4400 Muenster(DE)**
Erfinder: **Heimann, Dr., Ulrich**
**Schlagholz 28**
**D-4400 Muenster(DE)**

(74) Vertreter: **Welzel, Gunther, Dr. et al**
**c/o BASF Aktiengesellschaft**
**Carl-Bosch-Strasse 38**
**D-6700 Ludwigshafen(DE)**

## (54) Durch Protonieren mit Säure wasserverdünnbare Bindemittel für die Elektrotauchlackierung zur Herstellung dickschichtiger Überzüge.

(57) Die vorliegende Erfindung betrifft durch Protonieren mit Säure wasserverdünnbare Bindemittel für die kathodische Elektrotauchlackierung, erhältlich durch Umsetzung einer

A) Epoxidverbindung oder eines Gemisches von Epoxidverbindungen mit einem Epoxidäquivalentgewicht unter 2000 mit

B) einer gegenüber Epoxiden monofunktionell reagierenden, aliphatische oder phenolische OH-Gruppen enthaltenden Verbindungen und

C) einem sekundären Amin mit 2 bis 36 C-Atomen, mit der Maßgabe, daß das Reaktionsprodukt aus A), B) und C) noch freie Epoxidgruppen enthält, und

D) mindestens einer dieser freien Epoxidgruppen äquivalenten Menge eines primäre Aminogruppen enthaltenden Amidamins, erhältlich aus einem primären Diamin und einer Mono- und/oder Dicarbonsäure.

EP 0 352 671 A2

## Durch Protonieren mit Säure wasserverdünnbare Bindemittel für die Elektrotauchlackierung zur Herstellung dickschichtiger Überzüge

Die Erfindung betrifft durch Protonieren mit Säure wasserverdünnbare Bindemittel auf Basis eines mit einem Amidamin modifizierten Epoxidharzes für die Elektrotauchlackierung zur Herstellung von dickschichtigen Überzügen.

In der Automobilserienlackierung wird derzeit ein dreischichtiger Lackaufbau, bestehend aus kathodischer Elektrotauchgrundierung, Füll- und Decklack appliziert. Die Schichtdicken der Überzüge, die sich mit normalschichtiger kathodischer Tauchlackierung erzielen lassen, liegen bei etwa 20 µm. Mit Schichtdicken oberhalb 30 µm könnte auf die Füllerschicht verzichtet werden, was zu einer wesentlichen Vereinfachung des Lackierverfahrens führen würde.

In der DE-A 35 18 732 werden wasserverdünnbare Bindemittel für die kathodische Tauchlackierung auf Basis von Epoxidharzen mit Ammonium-, Sulfonium- und/oder Phosphoniumgruppen beschrieben, mit denen aber nur Überzüge mit Schichtdicken von 20 bis 29 um erzielt werden können.

In der DE-A 35 18 770 werden ebenfalls wasserverdünnbare Bindemittel auf Basis von modifizierten Epoxidharzen für die kathodische Elektrotauchlackierung beschrieben. Mit diesen Bindemitteln lassen sich Schichtdicken von 18 bis 23 µm erreichen.

Aufgabe der vorliegenden Erfindung war es, neue Bindemittel für die kathodische Tauchlackierung zu entwickeln, mit denen sich dickschichtige Überzüge herstellen lassen.

Gelöst wurde die Aufgabe mit durch Protonieren mit Säure wasserverdünnbaren Bindemitteln für die kathodische Elektrotauchlackierung, erhältlich durch Umsetzung einer

A) Epoxidverbindung oder eines Gemisches von Epoxidverbindungen mit einem Epoxidäquivalentgewicht unter 2000 mit

B) einer gegenüber Epoxiden monofunktionell reagierenden, aliphatische oder phenolische OH-Gruppen enthaltenden Verbindung und

C) einem sekundären Amin mit 2 bis 36 C-Atomen, mit der Maßgabe, daß das Reaktionsprodukt aus A), B) und C) noch freie Epoxidgruppen enthält, und

D) mindestens einer dieser freien Epoxidgruppen äquivalenten Menge eines primäre Aminogruppen enthaltenden Amidamins, erhältlich aus einem primären Diamin und einer Mono- und/oder Dicarbonsäure.

Zu den Aufbaukomponenten ist folgendes auszuführen.

Als Aufbaukomponente A) können Epoxidharze verwendet werden, die ein mittleres Molekulargewicht $M_n$ von 300 bis 2000 und im Mittel 1,5 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 1000, insbesondere 350 bis 550. Besonders bevorzugte Epoxidharze sind Glycidylether von im Mittel mindestens zwei phenolische Hydroxylgruppen im Molekül enthaltenden Polyphenolen die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4′-Dihydroxybenzophenon, 1, 1-Bis-(4-hydroxyphenyl)-ethan, 1, 1-Bis-(4-hydroxyphenyl)-isobutan, 2,2-Bis-(4-hydroxy-tert.-butylphenol)-propan, Bis-(4-hydroxynaphthyl)-methan und 1,5-Dihydroxynaphthalin.

Eine andere geeignete Klasse von Epoxidharzen sind Polyglycidylether von phenolischen Novolackharzen, wodurch die Funktionalität von 2 bis auf etwa 6 Glycidylgruppen pro Molekül gesteigert werden kann und die durch die folgende Formel wiedergegeben werden.

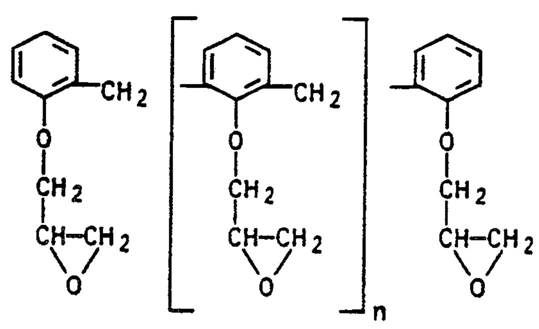

(I)

wobei n = 0 bis 6 ist.

Weiterhin sind Epoxidharze folgender Formel geeignet:

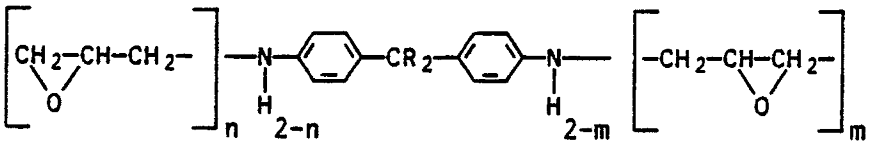

(II)

wobei n = 1 bis 2 und m = 1 bis 2 und R = H oder $C_1$-$C_{18}$-Alkylrest ist.

Ebenfalls geeignet sind Polyglycidylether von mehrwertigen Alkoholen wie von Ethylenglykol, Diethylenglykol, Triethylenglykol, 1,2-Propylenglykol, 1,3-Propandiol, 1,5-Pentandiol, 1,2,6-Hexandiol, Glycerin und 2,2-Bis-(4-hydroxycyclohexyl)-propan. Es können auch Polyglycidylester von Polycarbonsäuren verwendet werden. Bevorzugt werden Oxalsäure, Bernsteinsäure, Glutarsäure, Terephthalsäure, 2,6-Naphthalindicarbonsäure, dimerisierte Linolensäure. Typische Beispiele sind Glycidyladipat und Glycidylphthalat.

Als Aufbaukomponente B) können unter den Reaktionsbedingungen gegenüber Epoxiden monofunktionell reagierende, aliphatische oder phenolische OH-Gruppen enthaltende Verbindungen verwendet werden. Als aliphatische OH-Gruppen enthaltende Verbindungen können $C_1$-$C_{20}$-Alkohole wie beispielsweise lineare oder verzweigte Alkohole, Butanol, Hexanol, 2-Ethylhexanol oder Etherole wie Butylglykol, Hexylglykol, Methoxypropanol, Phenoxypropanol oder auch Polyetherole, die durch Umsetzung von Alkoholen oder Phenolen mit beispielsweise Ethylenoxid oder Propylenoxid oder Gemischen daraus erhältlich sind.

Geeignete phenolische OH-Gruppen enthaltende Verbindungen sind beispielsweise Phenol oder kernsubstituierte Phenole mit Alkyl- oder Alkoxyresten mit 1 bis 20 C-Atomen. Beispiele sind t-Butylphenol, Nonylphenol, Dodecylphenol, Anisol, Ethoxyphenol, Propoxyphenol, Butoxylphenol. Bevorzugt sind Nonylphenol und Dodecylphenol.

Als Aufbaukomponente C) können sekundäre Amine mit 2 bis 36 C-Atomen verwendet werden, wie Dimethylamin, Diethylamin, Dibutylamin oder Alkylalkanolamine wie Methylethanolamin, Ethylethanolamin, Methylisopropanolamin oder Dialkanolamine wie Diethanolamin oder Diisopropanolamin. Die sekundären Monoamine können auch noch weitere funktionelle Gruppen enthalten, sofern diese die Umsetzung der sekundären Amine mit den Polyepoxiden nicht stören. Die genannten sekundären Monoamine können allein oder als Mischung eingesetzt werden. Bevorzugt werden Alkanolamine, die ein bis zwei Hydroxylfunktionen tragen, wie z.B. Methylethanolamin oder Diethanolamin, verwendet.

Als Aufbaukomponente D) sind primäre Aminogruppen enthaltende Amidamine geeignet, die durch Kondensationsreaktion aus einem primären Diamin mit einer Mono- und/oder Dicarbonsäure hergestellt werden können. Als di-primäre Diamine eignen sich beispielsweise Ethylendiamin, 1,3-Diaminopropan, 1,4-Diaminobutan, 1,6-Diaminohexan, 4,9-Dioxadodecan-1, 12-diamin-1,12, 4,7-Dioxadodecan-1,10-diamin, 4,4-Diaminodicyclohexylmethan, 9-Aminomethylstearylamin, 2-(3-Aminopropyl)-cyclohexylamin, sowie verzweigte Diamine wie z.B. 2-Methylpentandiamin und 2-Ethylbutandiamin. Auch aromatische Diamine wie z.B. 4,4′-Diaminodiphenylmethan, 4,4′-Diaminodiphenyloxid, 4,4′-Diaminodiphenylsulfon, Toluylendiamin sowie Verbindungen mit benzylischen Aminfunktionen, wie z.B. Xylylendiamin kommen in Frage. Als Monocarbonsäuren eignen sich $C_{12}$-$C_{18}$-Fettsäuren wie beispielsweise Ölsäure, Linolsäure oder Linolensäure sowie Leinölfettsäure, die diese Fettsäuren im Gemisch enthält. Geeignete Dicarbonsäuren sind beispielsweise dimerisierte oder oligomerisierte ungesättigte $C_{14}$-$C_{22}$-Fettsäuren, wie sie beispielsweise unter der Bezeichnung Pripol® der Fa. Unichema im Handel sind. Zwar können Monocarbonsäuren auch allein eingesetzt werden, im allgemeinen ist es jedoch vorteilhaft, wenn Dicarbonsäuren mitverwendet werden. Umgekehrt können Dicarbonsäuren allein verwendet werden, was in vielen Fällen zu ausgezeichneten Bindemitteln führt, oft ist es jedoch vorteilhaft, untergeordnete Mengen an Monocarbonsäuren mitzuverwenden.

Damit die Carbonsäureamidamine noch freie primäre Aminogruppen enthalten, ist es erforderlich, mit einem ausreichenden Überschuß an diprimärem Amin zu arbeiten. Im allgemeinen wird ein 1,5 bis 10 molarer, bevorzugt ein 2 bis 6 molarer Überschuß an diprimärem Diamin verwendet, der gegebenenfalls nach der Kondensationsreaktion abdestilliert werden kann.

Die Umsetzung der Diamine mit den Carbonsäuren erfolgt im allgemeinen bei Temperaturen von 100 bis 250°C, vorzugsweise 150 bis 200°C. Zur leichteren Entfernung des bei der Kondensation gebildeten Wassers kann ein als Schleppmittel geeignetes Lösemittel wie z.B. Toluol oder Xylol zugegeben werden. Die Carbonsäuren können auch in Form ihrer Ester eingesetzt werden. In diesem Fall wird bei der Kondensation statt Wasser Alkohol abgespalten. Statt Fettsäuren können daher auch Fette, d.h. die Glycerinester der Fettsäuren, eingesetzt werden. Zur Herstellung der Komponente D) werden die primären Diamine und die Carbonsäuren in Äquivalenzverhältnissen $NH_2$:COOH von etwa 2:1 bis 10:1, bevorzugt 2,5:1 bis 5:1, eingesetzt. Es stört dabei nicht, sondern kann im Gegenteil in vielen Fällen sogar erwünscht sein, daß das Produkt, je nach eingesetztem Äquivalenzverhältnis, noch mehr oder weniger große Mengen

an freiem Diamin enthält.

Um eine mehrfache Reaktion der primären Aminogruppen mit den Epoxidgruppen des Reaktionsproduktes aus A), B) und C) zu verhindern, ist es vorteilhaft, die primäre Aminogruppe durch Ketiminisierung mit einer Carbonylverbindung zu schützen und in dieser Form mit dem Epoxidharz umzusetzen. Derartige Ketimine lassen sich leicht aus Ketonen und primären Diaminen unter Entfernung des gebildeten Wassers, z.B. durch azeotrope Destillation erhalten.

Als Ketone sind vor allem solche geeignet, die außer der Keto-Gruppe keine weitere gegenüber einer primären Amingruppe reaktive Gruppierung enthalten. Beispiele geeigneter Ketone sind Aceton, Methylethylketon, Methylpropylketon, Methylisopropylketon, Methylisobutylketon, Methylisoamylketon, Diethylketon, Dipropylketon, Cyclohexanon. Besonders bevorzugte Ketone sind Aceton, Methylethylketon und Methylisobutylketon.

Als Aufbaukomponente E) können diprimäre Diamine mitverwendet werden. Als diprimäre Diamine eignen sich beispielsweise Ethylendiamin, 1,3-Diaminopropan, 1,4-Diaminobutan, 1,6-Diaminohexan, 4,9-Dioxadodecandiamin-1,12, 4,4-Diaminodicyclohexylmethan, 9-Aminomethyl-stearylamin, 2-(3-Aminopropyl)-cyclohexylamin, sowie verzweigte Diamine wie z.B. 2-Methylpentandiamin und 2-Ethylbutandiamin. Auch ethergruppenhaltige Diamine wie 4,9-Dioxadodecan-1, 12-diamin und 4, 7, 10-Trioxatridecan-1, 13-diamin können mitverwendet werden. Die diprimären Diamine können noch weitere sekundäre oder tertiäre Aminogruppen enthalten wie Diethylentriamin, Dipropylentriamin, 3-(2-Aminoethyl)-aminopropylamin, Triethylentetramin, N,N′-Bis(3-aminopropyl)-ethylendiamin, Bis(2-aminoethyl)methylamin.

Auch bei der Komponente E) können die Aminogruppen wie bei Komponente A) ketiminisiert sein.

Bei Mitverwendung der Komponente E) wird diese in einer Menge eingesetzt, daß die Aminogruppen der Komponenten D) und E) in mindestens äquivalenter Menge, bezogen auf die freien Epoxidgruppen des Reaktionsproduktes aus A), B) und C), vorhanden sind.

Die Komponenten A) bis E) werden untereinander in folgenden äquivalenten Verhältnissen umgesetzt:

Pro Epoxidäquivalent der Komponente A) werden 0,05 bis 0,9, bevorzugt 0,1 bis 0,75 OH-Äquivalente der Komponente B) verwendet. Bei Komponente A), deren Epoxidäquivalentgewicht über 300 beträgt, sind 0,1 bis 0,3 OH-Äquivalente besonders bevorzugt. Für spezielle Verbindungen als Komponente A) haben sich spezielle Äquivalenzverhältnisse bewährt.

So werden für Bisphenol-A-Diglycidylether 0,1 bis 0,5 OH-Äquivalente bevorzugt, für epoxidierte Novolacke 0,4 bis 0,8 OH-Äquivalente und für Epoxidharze der Formel (II) 0,4 bis 0,6 OH-Äquivalente. Für jedes Epoxidäquivalent des Reaktionsproduktes aus Komponente A) und B) werden 0, 1 bis 0,85 mol, bevorzugt 0,3 bis 0,6 mol des sekundären Amins C) verwendet.

Für jedes Epoxidäquivalent des Reaktionsproduktes aus A), B) und C) werden 1,01 bis 1,8, bevorzugt 1,01 bis 1,4 Äquivalente Komponente D), bezogen auf jeweils eine primäre Aminogruppe, verwendet. Bei Mitverwendung der Komponente E) gilt der Bezug auf die Summe der Äquivalente aus D) und E).

Die Umsetzung der Komponente A) mit B) erfolgt bei 100 bis 190 °C, gegebenenfalls in Anwesenheit eines Katalysators wie Kalium-tert.-butylat, Bortrifluoridetherat, Diazabicyclo-2,2,2-octan, Dimethylbenzylamin, Diazabicycloundecan. Das Reaktionsprodukt aus A) und B) ,weist endständige Epoxidgruppen und ein mittleres Molekulargewicht von 600 bis 5000 auf.

Die Umsetzung dieses Reaktionsproduktes mit der Komponente C) kann bei Raumtemperatur durchgeführt werden, es ist jedoch zweckmäßig, zur Beschleunigung der Reaktion eine höhere Temperatur bis etwa 120 °C, bevorzugt bis etwa 90 °C zu wählen. Eine Reaktionszeit von 2 Stunden bei 70 bis 90 °C ist im allgemeinen ausreichend. Diese Bedingungen gelten auch für die weiteren Umsetzungen des Reaktionsproduktes aus A), B) und C) mit D) und gegebenenfalls E). Nur Ketimingruppen erfordern eine höhere Reaktionstemperatur zwischen 80 und 150 °C, bevorzugt 110 und 130 °C.

Die Aminzahlen der erfindungsgemäßen Bindemittel liegen zwischen 40 und 180 mg KOH pro g.

Die mittleren Molekulargewichte $\overline{M}_n$ der erfindungsgemäßen Bindemittel betragen etwa 500 bis 10.000, bevorzugt sind Molekulargewichte $\overline{M}_n$ zwischen 800 und 3000.

Die Viskositäten der erfindungsgemäßen Bindemittel liegen zwischen 200 und >4000 mPas bei 75 °C (Platte-Kegel-Viskosimeter). Die K-Werte liegen zwischen 15 und 35.

Bei der Dispergierung der Bindemittel in Wasser hydrolysieren Epoxid-Ketimin-Addukte zu sekundären Aminogruppen. Die erfindungsgemäßen Bindemittel enthalten nach der Behandlung mit Wasser Hydroxylgruppen, sekundäre Aminogruppen und zusätzlich primäre und/oder tertiäre Aminogruppen. Sie sind daher einer Vielzahl von Vernetzungsreaktionen zugänglich, was sie nach Zumischung geeigneter Vernetzer zu wertvollen Lackbindemitteln macht.

Geeignete Vernetzer für das erfindungsgemäße Bindemittel sind z.B. blockierte Isocyanate, phenolische Mannichbasen, Harnstoffkondensationsprodukte, über Esteraminolyse und/oder Umesterung härtende Vernetzer und andere, dem Fachmann bekannte Vernetzerarten.

Es ist nicht unbedingt nötig, separate Vernetzer zuzusetzen, da Vernetzungsfunktionen auch ganz oder teilweise in das erfindungsgemäße Bindemittel eingebaut werden können, so daß es ganz oder teilweise selbstvernetzend wird. Dies kann z.B. erfolgen, indem man das Bindemittel nach der Herstellung mit einem teilgeblockten Isocyanat umsetzt, welches im Mittel noch eine freie Isocyanatgruppe pro Molekül enthält. Als Verkappungsmittel können dabei alle dem Fachmann bekannten Verbindungen eingesetzt werden, bevorzugt Alkohole, Amine und Oxime.

Eine weitere Möglichkeit, die erfindungsgemäßen Bindemittel wenigstens zum Teil selbstvernetzend herzustellen, besteht in der unvollständigen Umsetzung mit Vernetzungskomponenten bei erhöhten Temperaturen. Dieses Ankondensieren von Vernetzer und Bindemittel kann z.B. bei der Verwendung phenolischer Mannichbasen und blockierten Isocyanatvernetzern erfolgen.

Außer Vernetzern können weitere Stoffe wie Pigmente, Lackhilfsmittel, Lösemittel und Härtungskatalysatoren zugesetzt werden. Die so hergestellten Überzugsmittel können auch durch übliche Methoden auf Substrate wie Holz, Kunststoff oder Metall aufgebracht werden. Für die Elektrotauchlackierung wird das erfindungsgemäße Bindemittel in Verbindung mit Vernetzern und den genannten Zusatzstoffen durch Protonieren mit Säure in eine wasserlösliche Form überführt. Als Säuren werden bevorzugt Carbonsäuren wie Ameisensäure, Essigsäure oder Milchsäure verwendet, aber auch anorganische Säuren, wie z.B. Phosphorsäure können eingesetzt werden.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen von 15 bis 40 °C, während einer Zeit von 0,5 bis 5 Minuten und bei pH-Werten von 4,0 bis 8,5, vorzugsweise 5,0 bis 8,0, im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120 °C ca. 20 Minuten gehärtet.

## Beispiele

Herstellung der Amidamine bzw. der ketiminisierten Amidamine [Komponenten (D) und (E)]:

### Amidamin 1:

580 g Hexamethylendiamin, 290 g Dimerfettsäure (Pripol® 1014, Fa. Unichema), 140 g Leinölfettsäure (Nouracid LE 80, Fa. Akzo) und 64 g Xylol wurden auf 190 °C erhitzt und 90 g Reaktionswasser-Xylol-Gemisch azeotrop abdestilliert. Man verdünnte mit 109 g Xylol. Anschließend wurden nochmals 36 g Hexamethylendiamin zugesetzt. Die Aminzahl des Produkts betrug 433 mg KOH/g und die Säurezahl 3,0 mg KOH/g.

### Amidamin 2:

290 g Hexamethylendiamin, 218 g Dimerfettsäure (Pripol 1014, Fa. Unichema), 70 g Leinölfettsäure (Nouracid LE 80, Fa. Akzo) und 31 g Xylol wurden auf 190 °C erhitzt und 48 g Reaktionswasser-Xylol-Gemisch azeotrop abdestilliert. Man verdünnte mit 92 g Xylol. Anschließend wurden nochmals 7g Hexamethylendiamin zugesetzt. Die Aminzahl des Produkts betrug 350 mg KOH/g und die Säurezahl 1,8 mg KOH/g.

### Amidamin 3:

290 g Hexamethylendiamin, 290 g Dimerfettsäure (Pripol 1014, Fa. Unichema), 70 g Leinölfettsäure (Nouracid LE 80, Fa. Akzo) und 34 g Xylol wurden auf 190 °C erhitzt und 54 g Reaktionswasser-Xylol-Gemisch azeotrop abdestilliert. Man verdünnte mit 70 g Xylol. Anschließend wurden nochmals 7,5g Hexamethylendiamin zugesetzt. Die Aminzahl des Produkts betrug 301 mg KOH/g und die Säurezahl 1,7 mg KOH/g.

Amidamin 4:

246 g Hexamethylendiamin, 307 g Dimerfettsäure (Pripol 1014, Fa. Unichema), 59 g Leinölfettsäure (Nouracid LE 80, Fa. Akzo) und 39 g Xylol wurden auf 190 °C erhitzt und 57 g Reaktionswasser-Xylol-Gemisch azeotrop abdestilliert. Man verdünnte mit 66 g Xylol. Anschließend wurden nochmals 4,1g Hexamethylendiamin zugesetzt. Die Aminzahl des Produkts betrug 249 mg KOH/g und die Säurezahl 1,6 mg KOH/g.

Amidamin 5:

290 g Hexamethylendiamin, 435 g Dimerfettsäure (Pripol 1014, Fa. Unichema), 70 g Leinölfettsäure (Nouracid LE 80, Fa. Akzo) und 42 g Xylol wurden auf 190 °C erhitzt und 78 g Reaktionswasser-Xylol-Gemisch azeotrop abdestilliert. Man verdünnte mit 85 g Xylol. Anschließend wurden nochmals 8,1 g Hexamethylendiamin zugesetzt. Die Aminzahl des Produkts betrug 219 mg KOH/g und die Säurezahl 1,9 mg KOH/g.

Amidamin 6:

258 g Diethylentriamin, 145 g Dimerfettsäure (Pripol 1014, Fa. Unichema), 70 g Leinölfettsäure (Nouracid LE 80, Fa. Akzo) und 25 g Xylol wurden auf 190 °C erhitzt und 44 g Reaktionswasser-Xylol-Gemisch azeotrop abdestilliert. Man verdünnte mit 51 g Xylol. Anschließend wurden nochmals 8,4g Diethylentriamin zugesetzt. Die Aminzahl des Produkts betrug 738 mg KOH/g und die Säurezahl 2,3 mg KOH/g.

Amidamin 7 (Amidamin-Ketimin):

500 g Amidamin 4 wurden mit 437 g Methylisobutylketon gemeinsam erhitzt. Innerhalb von 10 Stunden wurden 38 g Wasser azeotrop abdestilliert. Das Produkt hatte eine Aminzahl von 133 mg KOH/g.

Bindemittel:

Bindemittel 1:

960 g Epikote® 1001 (Polyglycidylether auf Basis eines Bisphenol A mit einem Bisphenol-A-Diglycidylether mit einem Epoxidequivalentgewicht von ca. 480, Fa. Shell), 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1036 betrug. Man verdünnte mit 403 g eines Lösemittelgemisches aus Isobutanol und Butylglykol (Gewichtsverhältnis 9:1) und kühlte auf 60 °C ab. Man tropfte 30 g Methylethanolamin hinzu und ließ noch weitere 10 Minuten reagieren. Dann wurden 81,6 g Amidamin 1 und 36,2 g Isobutanol-Butylglykol-Gemisch (9:1) hinzugegeben. Man hielt die Temperatur noch 2 Stunden auf 80 °C. Feststoffgehalt: 69,8 Gew.%; Aminzahl: 52 mg KOH/g.

Bindemittel 2:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1040 betrug. Man verdünnte mit 403 g eines Lösemittelgemisches aus Isobutanol und Butylglykol (Gewichtsverhältnis 9:1) und kühlte auf 60 °C ab. Man tropfte 30 g Methylethanolamin hinzu und ließ noch weitere 10 Minuten reagieren. Dann wurden 98,2 g Amidamin 2 und 41 g Isobutanol-Butylglykol-Gemisch (9:1) hinzugegeben. Man hielt die Temperatur noch 2 Stunden auf 80 °C. Feststoffgehalt: 70,1 Gew.%; Aminzahl: 50,8 mg KOH/g.

Bindemittel 3:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1058 betrug. Man verdünnte mit 403 g eines Lösemittelgemisches aus Isobutanol und Butylglykol (Gewichtsverhältnis 9:1) und kühlte auf 60 °C ab. Man tropfte 30 g Methylethanolamin hinzu und ließ noch weitere 10 Minuten reagieren. Dann wurden 117,4g Amidamin 3 und 47 g Isobutanol-Butylglykol-Gemisch (9:1) hinzugegeben. Man hielt die Temperatur noch 2 Stunden auf 80 °C. Feststoffgehalt: 71,6 Gew.%; Aminzahl: 49,5 mg KOH/g.

Bindemittel 4:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1092 betrug. Man verdünnte mit 403 g eines Lösemittelgemisches aus Isobutanol und Butylglykol (Gewichtsverhältnis 9:1) und kühlte auf 60 °C ab. Man tropfte 30 g Methylethanolamin hinzu und ließ noch weitere 10 Minuten reagieren. Dann wurden 142,1 g Amidamin 4 und 54 g Isobutanol-Butylglykol-Gemisch (9:1) hinzugegeben. Man hielt die Temperatur noch 2 Stunden auf 80 °C. Feststoffgehalt: 70,0 Gew.%; Aminzahl: 47,7 mg KOH/g.

Bindemittel 5:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1080 betrug. Man verdünnte mit 403 g eines Lösemittelgemisches aus Isobutanol und Butylglykol (Gewichtsverhältnis 9:1) und kühlte auf 60 °C ab. Man tropfte 30 g Methylethanolamin hinzu und ließ noch weitere 10 Minuten reagieren. Dann wurden 161,4 g Amidamin 5 und 60 g Isobutanol-Butylglykol-Gemisch (9:1) hinzugegeben. Man hielt die Temperatur noch 2 Stunden auf 80 °C. Feststoffgehalt: 70,1 Gew.%; Aminzahl: 46,7 mg KOH/g.

Bindemittel 6:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 1002 betrug. Man verdünnte mit 403 g eines Lösemittelgemisches aus Isobutanol und Butylglykol (Gewichtsverhältnis 9:1) und kühlte auf 60 °C ab. Man tropfte 32 g Methylethanolamin hinzu und ließ noch weitere 10 Minuten reagieren. Dann wurden 87,3g Amidamin 1 und 39 g Isobutanol-Butylglykol-Gemisch (9:1) hinzugegeben. Man hielt die Temperatur noch 2 Stunden auf 80 °C. Feststoffgehalt: 69,7 Gew.%; Aminzahl: 53,9 mg KOH/g.

Bindemittel 7:

960 g Epikote 1001, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidäquivalentgewicht 908 betrug. Man verdünnte mit 403 g eines Lösemittelgemisches aus Isobutanol und Butylglykol (Gewichtsverhältnis 9:1) und kühlte auf 60 °C ab. Man tropfte 36 g Methylethanolamin hinzu und ließ noch weitere 10 Minuten reagieren. Dann wurden 97,0 g Amidamin 1 und 43 g Isobutanol-Butylglykol-Gemisch (9:1) hinzugegeben. Man hielt die Temperatur noch 2 Stunden auf 80 °C. Feststoffgehalt: 70,1 Gew.%; Aminzahl: 59,9 mg KOH/g.

Bindemittel 8:

960 g Epikote 1001, 110 g Nonylphenol und 56 g Phenoxypropanol wurden auf 130 °C unter Rühren

erwärmt. Man gab 1,1 g Dimethylbenzylamin hinzu und ließ so lange reagieren, bis das Epoxidäquivalentgewicht 815 betrug. Man verdünnte mit 403 g eines Lösemittelgemisches aus Isobutanol und Butylglykol (Gewichtsverhältnis 9:1) und kühlte auf 60°C ab. Man tropfte 40 g Methylethanolamin hinzu und ließ noch weitere 10 Minuten reagieren. Dann wurden 109,4 g Amidamin 1 und 49 g Isobutanol-Butylglykol-Gemisch (9:1) hinzugegeben. Man hielt die Temperatur noch 2 Stunden auf 80°C. Feststoffgehalt: 69,8 Gew.%; Aminzahl: 63,4 mg KOH/g.

Bindemittel 9:

960 g Epikote 1001, 110 g Nonylphenol und 56 g Phenoxypropanol wurden auf 130°C unter Rühren erwärmt. Man gab 1,1 g Dimethylbenzylamin hinzu und ließ so lange reagieren, bis das Epoxidäquivalentgewicht 1098 betrug. Man verdünnte mit 403 g eines Lösemittelgemisches aus Isobutanol und Butylglykol (Gewichtsverhältnis 9:1) und kühlte auf 60°C ab. Man tropfte 30 g Methylethanolamin hinzu und ließ noch weitere 10 Minuten reagieren. Dann wurden 71,8 g Amidamin 6 und 34 g Isobutanol-Butylglykol-Gemisch (9:1) hinzugegeben. Man hielt die Temperatur noch 2 Stunden auf 80°C. Feststoffgehalt: 69,5 Gew.%; Aminzahl: 63,5 mg KOH/g.

Bindemittel 10:

451 g Araldit® GY2600 (Bisphenol-A-Diglycidylether mit einem Epoxidequivalentgewicht von ca. 180-190, Fa. Ciba-Geigy), 176 g Nonylphenol und 33 g Phenoxypropanol wurden auf 130°C unter Rühren erwärmt. Man gab 0,6 g Dimethylbenzylamin hinzu und ließ so lange reagieren, bis das Epoxidäquivalentgewicht 977 betrug. Man verdünnte mit 236 g eines Lösemittelgemisches aus Isobutanol und Butylglykol (Gewichtsverhältnis 9:1) und kühlte auf 60°C ab. Man tropfte 19 g Methylethanolamin hinzu und ließ noch weitere 10 Minuten reagieren. Dann wurden 52,4 g Amidamin 1 und 29 g Isobutanol-Butylglykol-Gemisch (9:1) hinzugegeben. Man hielt die Temperatur noch 2 Stunden auf 80°C. Feststoffgehalt: 70,1 Gew.%; Aminzahl: 55,1 mg KOH/g.

Bindemittel 11:

1504 g Araldit GY2600, 660 g Nonylphenol und 114 g Phenoxypropanol wurden auf 130°C unter Rühren erwärmt. Man gab 5,4 g Dimethylbenzylamin hinzu und ließ so lange reagieren, bis das Epoxidäquivalentgewicht 1022 betrug. Man verdünnte mit 813 g eines Lösemittelgemisches aus Isobutanol und Butylglykol (Gewichtsverhältnis 9:1) und kühlte auf 60°C ab. Man tropfte 64 g Methylethanolamin hinzu und ließ noch weitere 10 Minuten reagieren. Dann wurden 172,6 g Amidamin 1 und 77 g Isobutanol-Butylglykol-Gemisch (9:1) hinzugegeben. Man hielt die Temperatur noch 2 Stunden auf 80°C. Feststoffgehalt: 70,6 Gew.%; Aminzahl: 51,0 mg KOH/g.

Bindemittel 12:

940 g Araldit GY2600, 275 g Nonylphenol und 64 g Phenoxypropanol wurden auf 130°C unter Rühren erwärmt. Man gab 3,0 g Dimethylbenzylamin hinzu und ließ so lange reagieren, bis das Epoxidäquivalentgewicht 1112 betrug. Man verdünnte mit 457 g eines Lösemittelgemisches aus Isobutanol und Butylglykol (Gewichtsverhältnis 9:1) und kühlte auf 60°C ab. Man tropfte 33 g Methylethanolamin hinzu und ließ noch weitere 10 Minuten reagieren. Dann wurden 89,0 g Amidamin 1 und 40 g Isobutanol-Butylglykol-Gemisch (9:1) hinzugegeben. Man hielt die Temperatur noch 2 Stunden auf 80°C. Feststoffgehalt: 70,7 Gew.%; Aminzahl: 49,7 mg KOH/g.

Bindemittel 13:

440 g Epikote 155 (Polyglycidylether von phenolischen Novolakharzen entsprechend der Formel I mit einem Epoxidequivalentgewicht von ca. 180-190), 220 g Nonylphenol und 35 g Phenoxypropanol wurden auf 130°C unter Rühren erwärmt. Man gab 0,17 g Triphenylphosphin hinzu und ließ so lange reagieren, bis

das Epoxidäquivalentgewicht 445 betrug. Man verdünnte mit 248 g eines Lösemittelgemisches aus Isobutanol und Butylglykol (Gewichtsverhältnis 9:1) und kühlte auf 60° C ab. Man tropfte 51 g Methylethanolamin hinzu und ließ noch weitere 10 Minuten reagieren. Dann wurden 240,0 g Amidamin 4 und 90 g Isobutanol-Butylglykol-Gemisch (9:1) hinzugegeben. Man hielt die Temperatur noch 2 Stunden auf 80° C. Feststoffgehalt: 69,7 Gew.%; Aminzahl: 105,3 mg KOH/g.

Bindemittel 14:

414 g Epikote 155, 297 g Nonylphenol und 37 g Phenoxypropanol wurden auf 130° C unter Rühren erwärmt. Man gab 0,50 g Triphenylphosphin hinzu und ließ so lange reagieren, bis das Epoxidäquivalentgewicht 723 betrug. Man verdünnte mit 267 g eines Lösemittelgemisches aus Isobutanol und Butylglykol (Gewichtsverhältnis 9:1) und kühlte auf 60° C ab. Man tropfte 27 g Methylethanolamin hinzu und ließ noch weitere 10 Minuten reagieren. Dann wurden 127,2 g Amidamin 4 und 48 g Isobutanol-Butylglykol-Gemisch (9:1) hinzugegeben. Man hielt die Temperatur noch 2 Stunden auf 80° C. Feststoffgehalt: 70,9 Gew.%; Aminzahl: 61,3 mg KOH/g.

Bindemittel 15:

248 g Epikote MY 720 (Polyglycidylether von 4,4′-Diaminodiphenylalkan entsprechend der Formel II mit einem Epoxidequivalentgwicht von ca. 180-190), 220 g Nonylphenol und 25 g Phenoxypropanol wurden auf 130° C unter Rühren erwärmt. Man gab 0,12 g Triphenylphosphin hinzu und ließ so lange reagieren, bis das Epoxidäquivalentgewicht 477 betrug. Man verdünnte mit 176 g eines Lösemittelgemisches aus Isobutanol und Butylglykol (Gewichtsverhältnis 9:1) und kühlte auf 60° C ab. Man tropfte 30 g Methylethanolamin hinzu und ließ noch weitere 10 Minuten reagieren. Dann wurden 141,3 g Amidamin 4 und 53 g Isobutanol-Butylglykol-Gemisch (9:1) hinzugegeben. Man hielt die Temperatur noch 2 Stunden auf 80° C. Feststoffgehalt: 68,2 Gew.%; Aminzahl: 180,5 mg KOH/g.

Bindemittel 16:

298 g Epikote MY 720, 264 g Nonylphenol und 29 g Phenoxypropanol wurden auf 130° C unter Rühren erwärmt. Man gab 0,14 g Triphenylphosphin hinzu und ließ so lange reagieren, bis das Epoxidäquivalentgewicht 477 betrug. Dann setzte man 27 g Bisphenol A und 0,15 g Triphenylphosphin hinzu und ließ bis zu einem Epoxidäquivalentgewicht von 614 reagieren. Man verdünnte mit 223 g eines Lösemittelgemisches aus Isobutanol und Butylglykol (Gewichtsverhältnis 9:1) und kühlte auf 60° C ab. Man tropfte 29 g Methylethanolamin hinzu und ließ noch weitere 10 Minuten reagieren. Dann wurden 135,5 g Amidamin 4 und 51 g Isobutanol-Butylglykol-Gemisch (9:1) hinzugegeben. Man hielt die Temperatur noch 2 Stunden auf 80° C. Feststoffgehalt: 69,2 Gew.%; Aminzahl: 159,0 mg KOH/g.

Bindemittel 17:

298 g Epikote MY 720, 264 g Nonylphenol und 29 g Phenoxypropanol wurden auf 130° C unter Rühren erwärmt. Man gab 0,14 g Triphenylphosphin hinzu und ließ so lange reagieren, bis das Epoxidäquivalentgewicht 440 betrug. Dann setzte man 50 g Bisphenol A und 0,15 g Triphenylphosphin hinzu und ließ bis zu einem Epoxidäquivalentgewicht von 733 reagieren. Man verdünnte mit 232 g eines Lösemittelgemisches aus Isobutanol und Butylglykol (Gewichtsverhältnis 9:1) und kühlte auf 60° C ab. Man tropfte 23 g Methylethanolamin hinzu und ließ noch weitere 10 Minuten reagieren. Dann wurden 110,5 g Amidamin 4 und 42 g Isobutanol-Butylglykol-Gemisch (9:1) hinzugegeben. Man hielt die Temperatur noch 2 Stunden auf 80° C. Feststoffgehalt: 69,2 Gew.%; Aminzahl: 149,1 mg KOH/g.

Bindemittel 18:

298 g Epikote MY 720, 264 g Nonylphenol und 29 g Phenoxypropanol wurden auf 130° C unter Rühren erwärmt. Man gab 0,14 g Triphenylphosphin hinzu und ließ so lange reagieren, bis das Epoxidäquivalentgewicht 463 betrug. Dann setzte man 68 g Bisphenol A und 0,15 g Triphenylphosphin hinzu und ließ bis zu einem Epoxidäquivalentgewicht von 1028 reagieren. Man verdünnte mit 241 g eines Lösemittelgemisches aus Isobutanol und Butylglykol (Gewichtsverhältnis 9:1) und kühlte auf 60 °C ab. Man tropfte 18 g Methylethanolamin hinzu und ließ noch weitere 10 Minuten reagieren. Dann wurden 84,8 g Amidamin 4 und 32 g Isobutanol-Butylglykol-Gemisch (9:1) hinzugegeben. Man hielt die Temperatur noch 2 Stunden auf 80 °C. Feststoffgehalt: 69,5 Gew.%; Aminzahl: 142,1 mg KOH/g.

Bindemittel 19:

376 g eines Diglycidylethers von Bisphenol A mit einem Epoxidäquivalentgewicht von 188, 105 g Xylol, 44 g Nonylphenol und 6 g Dimethylbenzylamin wurden 6 Stunden auf 150 bis 160 °C erhitzt. Nach dieser Zeit betrug das Epoxidaquivalentgewicht etwa 430. Man ließ auf 80 °C abkühlen und gab 34 g Methylethanolamin, 56 g Isobutanol, 56 g Toluol und 264 g Amidamin 7 hinzu. Bei 120 °C wurde weitere 4 Stunden gerührt. Feststoffgehalt: 70,2 Gew.%; Aminzahl: 92 mg KOH/g.

Bindemittel 20:

376 g eines Diglycidylethers von Bisphenol A mit einem Epoxidäquivalentgewicht von 188, 105 g xylol, 44 g Nonylphenol und 6 g Dimethylbenzylamin wurden 6 Stunden auf 150 bis 160 °C erhitzt. Nach dieser Zeit betrug das Epoxidäquivalentgewicht etwa 430. Man verdünnte mit 65 g Isobutanol und 65 g Toluol und kühlte auf 60 °C ab. Es wurden 34 g Methylethanolamin hinzugetropft und 10 Minuten gerührt. Dann wurden 142 g Amidamin 4 hinzugegeben und die Reaktionsmischung wurde 2 Stunden bei 80 °C gehalten. Feststoffgehalt: 71 Gew.%; Aminzahl: 93 mg KOH/g.

Bindemittel 21:

752 g eines Diglycidylethers von Bisphenol A mit einem Epoxidäquivalentgewicht von 188, 199 g xylol, 44 g Nonylphenol und 6 g Dimethylbenzylamin wurden 6 Stunden auf 150 bis 160 °C erhitzt. Nach dieser Zeit betrug das Epoxidäquivalentgewicht etwa 400. Man ließ auf 80 °C abkühlen und gab 68 g Methylethanolamin, 105 g Isobutanol, 105 g Toluol und 528 g Amidamin 7 hinzu. Bei 120 °C wurde weitere 4 Stunden gerührt. Feststoffgehalt: 69,2 Gew.%; Aminzahl: 96 mg KOH/g.

Bindemittel 22:

376 g eines Diglycidylethers von Bisphenol A mit einem Epoxidäquivalentgewicht von 188, 251 g Xylol, 103 g eines ethoxylierten Alkylphenols mit einem mittleren Molekulargewicht $\overline{M}_n$ von 514 und 6 g Dimethylbenzylamin wurden 6 Stunden auf 150 bis 160 °C erhitzt. Nach dieser Zeit betrug das Epoxidäquivalentgewicht etwa 430. Man ließ auf 80 °C abkühlen und gab 34 g Methylethanolamin und 264 g Amidamin 7 hinzu. Bei 120 °C wurde weitere 4 Stunden gerührt. Feststoffgehalt: 69,5 Gew.%; Aminzahl: 85 mg KOH/g.

Vernetzer:

Vernetzer 1:

504 g trimerisiertes Hexamethylendiisocyanat wurden in 382 g Toluol gelöst. Bei 70 °C tropfte man unter Kühlen 388 g Dibutylamin hinzu. Man rührte bis der Isocyanatwert nahe null war.

Vernetzer 2:

504 g trimerisiertes Hexamethylendiisocyanat wurden in 223 g Toluol gelöst. Bei 70 °C tropfte man

unter Kühlen 388 g Dibutylamin hinzu. Man rührte bis der Isocyanatwert nahe null war.

Vernetzer 3:

152 g Bisphenol A, 63 g eines Diglycidylethers von Bisphenol A mit einem Epoxidäquivalentgewicht von 189 und 0,1 g Tributylphosphin wurden 1 Stunde auf 160 °C erhitzt. Nach dieser Zeit ließ sich kein Epoxid mehr nachweisen und es war ein kettenverlängerndes Diphenol entstanden. Dazu wurden 53,8 g Isopropanol, 129 g Di-n-butylamin, 31,5 g Paraformaldehyd und 17,6 g Isobutanol gegeben und 2 Stunden auf 80 °C erhitzt. Das Produkt hatte einen Feststoffgehalt von 80 Gew.%.

Dispersionen:

Die zur Herstellung der Dispersionen in der Tabelle angegebenen Mengen Bindemittel, Vernetzer und Essigsäure wurden innig vermischt. Zu dem Gemisch wurde unter Rühren langsam die angegebene Menge Wasser hinzugetropft.

| Disp. | Bindem. | Menge | Vernetzer | Menge | Essigsäure | Wasser |
|---|---|---|---|---|---|---|
| 1 | 1 | 852 g | 1 | 364 g | 11,6 g | 1212 g |
| 2 | 2 | 850 g | 1 | 364 g | 14,2 g | 1214 g |
| 3 | 3 | 831 g | 1 | 364 g | 15,7 g | 1234 g |
| 4 | 4 | 850 g | 1 | 364 g | 17,2 g | 1214 g |
| 5 | 5 | 849 g | 1 | 364 g | 17,0 g | 1215 g |
| 6 | 6 | 854 g | 2 | 319 g | 15,1 g | 1255 g |
| 7 | 7 | 849 g | 2 | 319 g | 16,5 g | 1260 g |
| 8 | 8 | 852 g | 2 | 319 g | 17,7 g | 1257 g |
| 9 | 9 | 856 g | 1 | 364 g | 17,8 g | 1208 g |
| 10 | 10 | 849 g | 1 | 364 g | 15,4 g | 1215 g |
| 11 | 11 | 843 g | 2 | 318 g | 14,3 g | 1267 g |
| 12 | 12 | 842 g | 2 | 318 g | 15,9 g | 1268 g |
| 13 | 13 | 854 g | 1 | 364 g | 18,4 g | 1210 g |
| 14 | 14 | 839 g | 1 | 364 g | 15,6 g | 1225 g |
| 15 | 15 | 872 g | 1 | 364 g | 28,7 g | 1193 g |
| 16 | 16 | 860 g | 1 | 364 g | 25,3 g | 1205 g |
| 17 | 17 | 860 g | 1 | 364 g | 23,7 g | 1205 g |
| 18 | 18 | 856 g | 1 | 364 g | 22,6 g | 1209 g |
| 19 | 19 | 850 g | 2 | 320 g | 19,5 g | 1200 g |
| 20 | 20 | 850 g | 3 | 320 g | 19,5 g | 1200 g |
| 21 | 21 | 850 g | 1 | 360 g | 19,5 g | 1200 g |
| 22 | 22 | 850 g | 2 | 320 g | 19,5 g | 1200 g |

Pigmentpaste:

Zu 525,8 g eines Bindemittels wie es in der EP 167 029 als Komponente A1 beschrieben ist, wurden 168,7 g Butylglykol, 600 g Wasser und 17,7 g Essigsäure gegeben. Dann setzte man 800 g Titandioxid, 11,0 g Ruß und 50 g basisches Bleisilikat hinzu und mahlte auf einer Kugelmühle bis zu einer Korngröße kleiner 9 µm. Man stellte den Feststoffgehalt mit Wasser auf 48 Gew.% ein.

Elektrotauchbäder:

Zu 1980 g Dispersion gab man 775 g Pigmentpaste, rührte innig und füllte mit Wasser auf 5000 g auf. Die Elektrotauchbäder wurden 120 Stunden bei 28 °C gerührt. An kathodisch geschalteten, zinkphosphatierten Prüftafeln aus Stahl wurden bei der in der Tabelle angegebenen Spannung innerhalb 120 Sekunden Filme abgeschieden und 20 Minuten bei 170 °C eingebrannt. Die folgende Tabelle zeigt die Ergebnisse.

| Disp. | pH | Lw | U | SD | Erichsen | 1000h SST |
|---|---|---|---|---|---|---|
| 1 | 6,60 | 1,26 | 400 | 35 | 7,2 | 0,9 |
| 2 | 6,80 | 1,19 | 330 | 29 | 9,8 | 0,2 |
| 3 | 6,78 | 1,85 | 340 | 32 | 10,5 | 0,3 |
| 4 | 6,59 | 1,25 | 380 | 28 | 9,7 | 0,3 |
| 5 | 6,80 | 1,67 | 380 | 37 | 9,4 | 0,2 |
| 6 | 6,87 | 1,95 | 350 | 32 | 9,6 | 0,3 |
| 7 | 7,20 | 2,07 | 370 | 32 | 9,3 | 0,3 |
| 8 | 6,80 | 1,94 | 290 | 27 | 8,9 | 0,2 |
| 9 | 6,88 | 1,82 | 310 | 27 | 8,6 | 0,4 |
| 10 | 6,92 | 1,71 | 330 | 35 | 9,5 | 0,5 |
| 11 | 6,80 | 1,80 | 280 | 32 | 7,1 | 0,6 |
| 12 | 6,55 | 1,18 | 400 | 30 | 9,6 | 0,6 |
| 13 | 7,72 | 2,40 | 200 | 30 | 8,5 | 0,3 |
| 14 | 6,34 | 0,99 | 300 | 29 | 9,2 | 0,5 |
| 15 | 6,87 | 2,42 | 260 | 26 | 8,3 | 0,3 |
| 16 | 6,83 | 2,12 | 250 | 29 | 7,8 | 0,7 |
| 17 | 6,61 | 1,90 | 290 | 26 | 7,0 | 0,5 |
| 18 | 7,20 | 1,80 | 290 | 27 | 7,1 | 0,3 |
| 19 | 7,80 | 2,54 | 250 | 32 | 8,5 | 0,2 |
| 20 | 7,60 | 2,45 | 280 | 25 | 8,7 | 0,2 |
| 21 | 7,35 | 2,32 | 280 | 28 | 8,0 | 0,2 |
| 22 | 7,50 | 2,84 | 200 | 36 | 9,5 | 0,4 |

pH = pH-Wert des Bades
Lw = Leitwert des Bades in mS/cm
U = Abscheidespannung in Volt
SD = Schichtdicke des Lacks in µm
Erichsen = Erichsentiefung in mm
1000h SST = 1000 Stunden Salzsprühtest nach DIN 50021

**Ansprüche**

1. Durch Protonieren mit Säure wasserverdünnbare Bindemittel für die kathodische Elektrotauchlackierung, erhältlich durch Umsetzung einer

A) Epoxidverbindung oder eines Gemisches von Epoxidverbindungen mit einem Epoxidäquivalentgewicht unter 2000 mit

B) einer gegenüber Epoxiden monofunktionell reagierenden, aliphatischen oder phenolischen Hydroxyverbindung und

C) einem sekundären Amin mit 2 bis 36 C-Atomen, mit der Maßgabe, daß das Reaktionsprodukt aus A), B) und C) noch freie Epoxidgruppen enthält, und

D) mindestens einer dieser freien Epoxidgruppen äquivalenten Menge eines primäre Aminogruppen enthaltenden Amidamins, erhältlich aus einem primären Diamin und einer Mono- und/oder Dicarbonsäure.

2. Bindemittel nach Anspruch 1, erhältlich unter Mitverwendung eines diprimären Diamins E) in einer Menge, daß die Aminogruppen der Komponenten D) und E) in mindestens äquivalenter Menge, bezogen auf die freien Epoxidgruppen des Reaktionsproduktes aus A), B) und C), vorhanden sind.

3. Bindemittel nach Anspruch 1 oder 2, erhältlich unter Mitverwendung von Komponenten D) und E), deren primäre Aminogruppen ketiminisiert sind.

4. Bindemittel nach einem der Ansprüche 1 bis 3, erhältlich unter Verwendung eines Phenols oder kernsubstituierten Phenols, wobei als Substituent Alkyl-, Alkoxy- oder Polyetherreste mit 1 bis 20 Kohlenstoffatomen verwendet werden, als Komponente B).

5. Verwendung der durch Protonieren mit Säure wasserverdünnbaren Bindemittel gemäß einem der Ansprüche 1 bis 6 in Form einer wäßrigen Dispersion, die zusätzlich noch Vernetzer und gegebenenfalls Pigmente, organische Lösemittel und/oder weitere Hilfsstoffe enthält, als Überzugsmittel.

6. Überzugsmittel gemäß Anspruch 7, enthaltend als Vernetzer ein mehrwertiges geblocktes Isocyanat, ein Aminoplast- oder Phenoplast-Harz, ein mehrfach aminoalkyliertes Polyphenol, einen über Esteraminolyse und/oder Umesterung härtenden Vernetzer, ein Harnstoffkondensationsprodukt oder ein Gemisch aus diesen Vernetzern.

7. Verfahren zur Herstellung von Überzügen durch kathodische Elektrotauchlackierung aus einem Elektrotauchlackierbad, dadurch gekennzeichnet, daß als Elektrotauchbad ein mit Säure verdünnbares Bindemittel gemäß einem der Ansprüche 1 bis 6 mit gegebenenfalls noch weiteren Hilfsstoffen verwendet wird.

8. Mit einem Überzug versehener Gegenstand, erhältlich durch Aufbringen eines Überzugsmittels gemäß einem der Ansprüche 7 oder 8 auf diesen Gegenstand und anschließendes Einbrennen.

Patentansprüche für folgenden Vertragsstaat:ES

1. Verfahren zur Herstellung von mit Säure wasserverdünnbaren Bindemitteln für die kathodische Elektrotauchlackierung, dadurch gekennzeichnet, daß man

A) eine Epoxidverbindung oder ein Gemisch von Epoxidverbindungen mit einem Epoxidäquivalentgewicht unter 2000 mit

B) einer gegenüber Epoxiden monofunktionell reagierenden, aliphatischen oder phenolischen Hydroxyverbindung und

C) einem sekundären Amin mit 2 bis 36 C-Atomen umsetzt,

mit der Maßgabe, daß das Reaktionsprodukt aus A), B) und C) noch freie Epoxidgruppen enthält,

und das so erhaltene Reaktionsprodukt mit

D) mindestens einer dieser freien Epoxidgruppen äquivalenten Menge eines primäre Aminogruppen enthaltenden Amidamins, erhältlich aus einem primären Diamin und einer Mono- und/oder Dicarbonsäure, umsetzt.

2. Verfahren zur Herstellung eines Bindemittels nach Anspruch 1, dadurch gekennzeichnet, daß man zusätzlich ein diprimäres Diamin E) in einer Menge mitverwendet, daß die Aminogruppen der Komponenten D) und E) in mindestens äquivalenter Menge, bezogen auf die freien Epoxidgruppen des Reaktionsproduktes aus A), B) und C), vorhanden sind.

3. Verfahren zur Herstellung eines Bindemittels nach Anspruch 1 oder 2, dadurch gekennzeichnet, daß Komponenten D) und E) mitverwendet werden, deren primäre Aminogruppen ketiminisiert sind.

4. Verfahren zur Herstellung eines Bindemittels nach einem der Ansprüche 1 bis 3, dadurch gekennzeichnet, daß als Komponente B) Phenol oder ein kernsubstituiertes Phenol mit Alkyl-, Alkoxy- oder Polyetherresten mit 1 bis 20 Kohlenstoffatomen als Substituenten verwendet wird.

5. Verfahren zur Herstellung eines Überzugsmittels, dadurch gekennzeichnet, daß durch Protonieren mit Säure wasserverdünnbare Bindemittel gemäß einem der Ansprüche 1 bis 4 in Form einer wäßrigen Dispersion, die zusätzlich noch Vernetzer und gegebenenfalls Pigmente, organische Lösemittel und/oder weitere Hilfsstoffe enthält, verwendet werden.

6. Verfahren zur Herstellung eines Überzugsmittels gemäß Anspruch 7, dadurch gekennzeichnet, daß als Vernetzer ein mehrwertiges geblocktes Isocyanat, ein Aminoplast- oder Phenoplast-Harz, ein mehrfach aminoalkyliertes Polyphenol, einen über Esteraminolyse und/oder Umesterung härtenden Vernetzer, ein Harnstoffkondensationsprodukt oder ein Gemisch aus diesen Vernetzern, verwendet wird.

7. Verfahren zur Herstellung von Überzügen durch kathodische Elektrotauchlackierung aus einem Elektrotauchlackierbad, dadurch gekennzeichnet, daß als Elektrotauchbad ein mit Säure verdünnbares Bindemittel gemäß einem der Ansprüche 1 bis 6 mit gegebenenfalls noch weiteren Hilfsstoffen verwendet wird.

8. Verfahren zur Herstellung eines mit einem Überzug versehenen Gegenstandes, dadurch gekennzeichnet, daß ein Überzugsmittel gemäß einem der Ansprüche 6 oder 7 auf diesen Gegenstand aufgebracht und anschließend eingebrannt wird.